# EUROPEAN PATENT APPLICATION

(11) **EP 1 612 095 A2**
(43) Date of publication of application: **04.01.2006**
(21) Application number: 05013307.3
(22) Date of filing: 21.06.2005
(51) Int. Cl.: B60N 2/42, B60N 2/02

(54) **Apparatus for protecting a vehicle occupant**

(30) Priority: 28.06.2004 JP 2004190349
(71) Applicant: AISIN SEIKI KABUSHIKI KAISHA, Kariya-shi, Aichi-ken 448-8650 (JP)
(72) Inventor: Tsuruta, Manabu, 2-chome Kariya-shi Aichi-ken 448-8650 (JP); Aoki, Koji, 2-chome Kariya-shi Aichi-ken 448-8650 (JP); Hirota, Koichi, 2-chome Kariya-shi Aichi-ken 448-8650 (JP); Aiyama, Takaya, 2-chome Kariya-shi Aichi-ken 448-8650 (JP)
(74) Representative: Pautex Schneider, Nicole Véronique

(57) **Abstract**

An apparatus for protecting a vehicle occupant includes an impact-predicting means (23) for predicting an impact of a vehicle, a seat operating means (16) for operating, based on an output from the impact-predicting means (23), a predetermined operating mechanism (15) so as to control each portion of a seat (1) to a predetermined target position, a controlling means (11) for controlling operation of the seat operating means (16). A speed for operating the seat by the seat operating means is selectively set at a first operating speed, which is employed at an emergency condition at which a vehicle impact is predicted, and at a second operating speed, which is employed at a normal condition at which a vehicle impact is not predicted, and is lower than the first operating speed.

## Description

### FIELD OF THE INVENTION

This invention generally relates to an apparatus for protecting an occupant of a vehicle, the apparatus which incorporates, therein, an impact early-warning means for foreseeing, or computing beforehand, impact which could be a possible accident.

### BACKGROUND

In general, a vehicle has been provided with safety equipments, such as seat belts and airbags, which are employed so as to restrain occupants of the vehicle from unexpected behavior and to protect them from being killed or injured especially on the eventuality of emergencies such as a vehicle crash, a vehicle overturn, and a vehicle rollover. However, depending on a longitudinal position of a seat, on which the occupant has actually been seated, or on a degree to which a seat back is reclined, these safety equipments do not always perform at the maximum extent. In the light of the foregoing, recent requirements have led to improving a safety level of vehicle conditions including a vehicle seat posture in anticipation of a vehicle impact (including overturn and rollover).

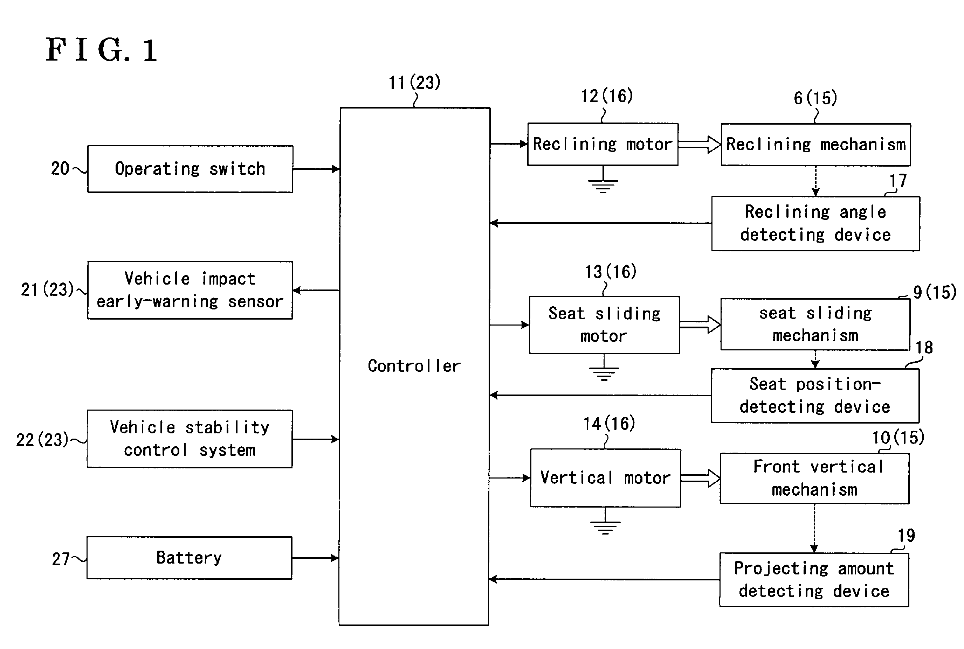

A vehicle seat provided with an occupant protecting apparatus, which is safety equipment, have been widely known as a pre-crash safety seat. For example, a seat belt, of which tension is increased by operating a seat belt pre-tensioner when a vehicle impact is foreseen or calculated beforehand, restrains an occupant onto a vehicle seat and protects the occupant from being killed or injured. However, when a seat back has reclined rearwards excessively, a sufficient effect in protecting the occupant may not be achieved even when the tension of the seat belt is increased. In light of the foregoing, a vehicle occupant protecting apparatus is disclosed in JP2000(11)-334437A, especially as described in page 2, and as illustrated in Fig. 1. In this apparatus, in order to protect a vehicle occupant appropriately, an angle of an inclined seat back is detected when a vehicle impact is predicted or calculated beforehand. When the angle of this inclined seat back does not fall within a predetermined angle range, the seat back is returned to an inclining posture that falls within the predetermined angle range.

Further, even if, at the event of emergency such as when a vehicle impact is foreseen or computed beforehand, a vehicle seat is returned to a position which is appropriate to protect an occupant from being killed or injured, a period of time is on occasions very short, which is calculated from a time, that a vehicle impact is computed beforehand, till a time of an actual vehicle impact. In such a case, it is necessary to operate at a high speed the vehicle seat to a position, which is appropriate for the purpose of protecting the vehicle occupant. In order to overcome this matter, JP1998(10)-309967A, especially as described in column 0013, discloses a structure with an actuator which houses explosives for an emergency use. According to this structure, at an emergency, the actuator is driven so as to pull in a wire in response to ignition of the housed explosives, wherein the vehicle seat is operated to an appropriate position at a high speed.

The method of operating a vehicle seat as disclosed in JP1998(10)-309967A is preferable in terms of operating a vehicle seat at a high speed. However, this method is not preferable in terms of being performed multiple times. Therefore, recent requirements have led to a method according to which an actuator such as a motor and a solenoid is employed, which enables to operate a vehicle seat repeatedly and at a high speed. This method may operate a vehicle seat at a high speed not only under an emergency condition such as when a vehicle impact is foreseen, but also under a normal vehicle condition. However, under a normal vehicle condition, in general, a vehicle occupant intends to set a vehicle seat at a position which meets a demand of each occupant. In such case, it is preferable that a vehicle seat is operated at a relatively low speed which is not unpleasant for an occupant. If a vehicle seat is operated at a high speed, an occupant may feel uncomfortable, and further, it may be difficult to finely adjust a seat position.

Still further, when a vehicle condition is controlled to be appropriate in anticipation of a vehicle crash in order to protect a vehicle occupant from jumping out of a vehicle as a result of a vehicle crash (including a vehicle turnover and rollover), it is necessary to operate multiple equipments, such as a vehicle seat, a seat belt, a window and a sun roof, at the same time. In general, because these equipments are operated by respective actuators such as motors, multiple motors are driven at the same time. In this case, inrush current may be supplied to the respective motors at the same time, and high current may be instantly supplied to the wires which supply electric power to the respective motors. As a result, voltage drop may occur due to, wire resistance, and deficiencies in electric current supplied by a battery. A degree of motor torque is hence reduced, and an appropriate speed for operating a vehicle seat, which is necessary at an emergency use, cannot be obtained. Therefore, there is a problem that an operation, which is necessary for the purpose of protecting a vehicle occupant at an emergency such as a vehicle impact, cannot be performed quickly.

Still further, at both the emergency and normal conditions, there is a danger of a vehicle seat operation speed of fluctuating due to a load subjected to the vehicle seat. For example, when a load applied to the vehicle seat is inferior to an expected degree of load, there is a danger of the seat operation speed of being increased. In this case, a vehicle occupant on occasions feels unpleasant about this seat operation speed. Especially at an emergency, there is a danger of a load applied to a body of the occupant of being increased.

The present invention has been made in view of the above circumstances, and provides a vehicle occupant protecting apparatus, according to which a seat operating speed is adjusted to be appropriate to respective vehicle conditions of emergency and normal conditions.

### SUMMARY OF THE INVENTION

According to an aspect of the present invention, an apparatus for protecting a vehicle occupant includes: an impact-predicting means for predicting an impact of a vehicle; a seat operating means for operating, based on an output from the impact-predicting means, a predetermined operating mechanism so as to control each portion of a seat to a predetermined target position; and a controlling means for controlling operation of the seat operating means. A speed for operating the seat by the seat operating means is selectively set at a first operating speed, which is employed at an emergency condition at which a vehicle impact is predicted, and at a second operating speed, which is employed at a normal condition at which a vehicle impact is not predicted, and is lower than the first operating speed.

According to another aspect of the present invention, at an emergency condition, if an actually supplied voltage value to the seat operating means is different from a steady state voltage value of the seat operating means, a control set value is changed in response to a difference between the actually supplied voltage value and the steady state voltage value in such a manner that the actually supplied voltage value to the seat operating means is controlled to an emergency set voltage value of the seat operating means, and wherein the speed for operating the seat is controlled to be the first operating speed.

According to still another aspect of the present invention, at a normal condition, if an actual seat speed by the seat operating means is different from the second operating speed, a control set value of the actually supplied voltage value to the seat operating means is changed in response to a difference between the actual seat speed and the second operating speed, and wherein the speed for operating the seat is approximated to be the second operating speed.

### BRIEF DESCRIPTION OF THE DRAWINGS

The foregoing and additional features and characteristics of the present invention will become more apparent from the following detailed description considered with reference to the accompanying drawings, wherein:

Fig. 1 is a block view schematically illustrating a control mechanism of a vehicle occupant protecting apparatus according to an embodiment of the present invention;

Fig. 2 is a view illustrating a seat which is supposed to be operated by the vehicle occupant protecting apparatus according to the embodiment of the present invention;

Fig. 3 is a flowchart for explaining controlling operation of the seat by the vehicle occupant protecting apparatus;

Fig. 4 is a flowchart for explaining controlling a seat speed at an emergency condition;

Fig. 5 is a flowchart for explaining controlling a seat speed at a normal condition;

Fig. 6 is a diagram for explaining a relationship between a voltage applied to a seat operating means and a seat speed.

### DETAILED DESCRIPTION

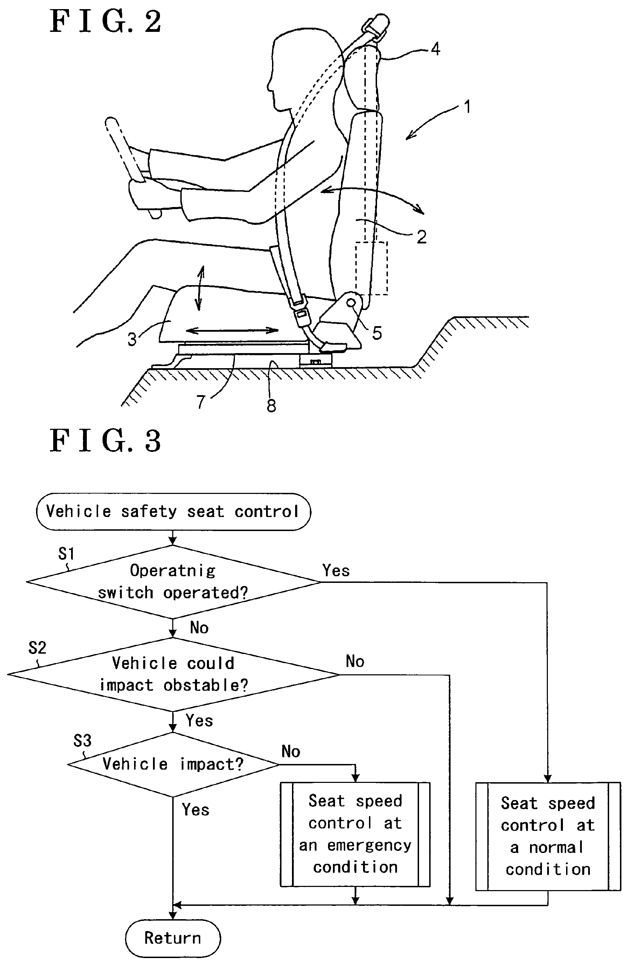

An embodiment of the present invention will be described hereinbelow in detail with reference to the accompanying drawings. As is illustrated in Fig. 2, a seat 1 is illustrated as a seat for a driver which drives a vehicle. However, this seat 1 can be applied as a front-passenger's seat.

A vehicle occupant protecting apparatus according to the embodiment of the present invention is a so-called pre-crash seat which operates, for example a seat, to a position which is appropriate to protect a vehicle occupant at an emergency such as when a vehicle impact is predicted or calculated in advance. Herein, an event of emergency represents a condition that a vehicle impact, a vehicle rollover, a vehicle turnover or the like is foreseen or computed in advance. Described below is about an operation of the seat 1 by the vehicle occupant protecting apparatus according to the embodiment of the present invention, the operation which reclines the seat 1, slidably moves the seat 1 in a longitudinal direction, and moves the seat 1 in a vertical direction. However, the operation of the seat 1 is not limited to the above.

As is illustrated in Figs. 1 and 2, the seat 1 is configured with a seat back 2, a seat cushion 3, and a headrest 4. The seat back 2 is equipped to the seat cushion 3 via predetermined fulcrums 5 and can be reclined rearward and forward by a reclining mechanism 6. The seat cushion 3 is attached to a vehicle floor 8 via a slide rail 7 and can be moved slidably back and forth by a seat sliding mechanism 9. A front vertical mechanism 10 is provided at a front portion of the seat cushion 3, wherein a vertically projecting amount of the front portion of the seat cushion 3 can be adjusted as needed.

The reclining mechanism 6 can change a reclining angle of the seat back 2 by a reclining motor 12 which is driven on the basis of a control signal outputted from a controller 11. The seat sliding mechanism 9 moves the seat cushion 3 slidably back and forth by a seat sliding motor 13 which is driven on the basis of a control signal outputted from the controller 11. Therefore, the entire seat 1 can be moved slidably back and forth. The front vertical mechanism 10 moves the front portion of the seat cushion 3 in the vertical direction by a vertical motor 14 which is driven on the basis of a control signal outputted from the controller 11. As described above, the reclining mechanism 15, the seat sliding mechanism 9, and the front vertical mechanism 10 respectively serves as a predetermined operating mechanism 15. Further, the reclining motor 12, the seat sliding motor 13 and the vertical motor 14 respectively serves as a seat operating means 16.

The reclining mechanism 6 is provided with a reclining angle detecting device 17 which detects an actual reclining angle of the seat back 2. The seat sliding mechanism 9 is provided with a seat position-detecting device 18, which detects a longitudinal position of the seat 1 moved slidably back and forth. The front vertical mechanism 10 is provided with a projecting amount detecting device 19, which detects a vertically projecting amount of a front portion of the seat cushion 3. As the reclining angle detecting device 17, the seat position-detecting device 18 and the projecting amount detecting device 19 respectively, an angle measuring equipment such as a potentiometer and a rotary encoder, or a length measuring equipment such as a linear potentiometer and a linear encoder, can be employed.

The seat 1 is further provided with an operating switch 20 for the reclining mechanism 6, the seat sliding mechanism 9, and the front vertical mechanism 10, the operating switch 20 which is manually operated by a vehicle occupant for the purpose of adjusting the seat 1 to be appropriate. With reference to Fig. 1, although the operating switch 20 is illustrated as a single box, it is preferable that each mechanism is provided with the operating switch 20 respectively. In response to operation of the switching switch 20 by an occupant, a command signal, which corresponds to an operating amount or an operating period of time, is inputted to the controller 11. This signal is employed as a command outputted from the switching switch 20 to operate each mechanism. The controller 11 then outputs, on the basis of the command signal, a drive control signal to each of the reclining motor 12, the seat sliding motor 13 and the vertical motor 14, wherein the reclining mechanism 6, the seat sliding mechanism 9, and the front vertical mechanism 10 is operated respectively.

The vehicle occupant protecting apparatus according to the embodiment of the present is further provided with a vehicle impact early-warning sensor 21 and a vehicle stability control system 22.

The vehicle impact early-warning sensor 21 which is configured with a millimeter-wave radar for detecting an obstacle existing around a vehicle, an image recognition device, and so on. A control signal outputted from this vehicle impact early-warning sensor 21 is imputed into the controller 11. The controller 11 calculates, on the basis of the signal outputted from the vehicle impact early-warning sensor 21, information such as a distance between a vehicle and an obstacle, and a vehicle relative speed. The controller 11 further calculates, on the basis of those information, a possibility of a vehicle impact under a fixed determining condition.

The vehicle stability control system 22 is employed as a system for assuring a vehicle stability by controlling, on the basis of vehicle front or rear wheels' side skid, a brake performance of each vehicle wheel and an output from an engine. Because, when this vehicle stability control system 22 is operated, it is acceptable to determine a possibility of a vehicle impact, the vehicle stability control system 22 hence outputs a signal to the controller 11 in accordance with an operation condition of itself. The controller 11 then determines, on the basis of the signal outputted from the vehicle stability control system 22, a possibility of a vehicle impact under a fixed determining condition.

As described above, according to the embodiment of the present invention, an impact predicting means 23 is configured with the vehicle impact early-warning sensor 21, the vehicle stability control system 22, and the controller 11. When the controller 11 determines, on the basis of outputs from either the vehicle impact early-warning sensor 21 or the vehicle stability control system 22, or from both thereof, that it is impossible to avoid a vehicle impact at a fixed rate or more, a vehicle condition is considered to be a vehicle impact early-warning condition. The controller 11 still further foresees or calculates in advance, on the basis of outputs from either the vehicle impact early-warning sensor 21 or the vehicle stability control system 22, or from both of them, a possible or expected vehicle impact time at which a vehicle may impact. This possible vehicle impact time is calculated on the basis of information such as a distance between a vehicle and an obstacle, and a relative vehicle speed. When the controller 11 then determines that a current vehicle condition is a vehicle impact early-warning condition, the controller 11 outputs drive control signals to the seat operating means 16 such as the reclining motor 12, the seat sliding motor 13, and the vertical motor 14, and then controls operation of at least one of the predetermined operating mechanism 15 such as the reclining mechanism 6, the seat sliding mechanism 9, the front vertical mechanism 10. In this case, it is necessary to complete an operation of each of the reclining mechanism 6, the seat sliding mechanism 9 and the front vertical mechanism 10 by the possible vehicle impact time.

According to the embodiment of the present invention, the vehicle occupant protecting apparatus is provided with the impact predicting means 23 for foreseeing and calculating in advance a vehicle impact. When the controller 11 determines that an actual vehicle condition is a vehicle impact early-warning condition, the seat operating means 16, which operates the predetermined operating mechanism 15, and the controller 11, which controls the operation of the seat operating means 16, are operated on the basis of the outputs from the impact predicting means 23, wherein each portion of the seat 1 is adjusted to a predetermined target position. In this case, the predetermined target position includes not only a position of the seat 1 but also a posture of the seat 1. Herein, the controller 11 sets an operating speed of the seat 1 operated by the seat operating means 16 at a first operating speed, which is employed at an emergency such as when a vehicle impact is foreseen or calculated in advance, and at a second operating speed, which is employed at a normal condition such as when a vehicle impact is not foreseen and calculated in advance. The second operating speed is set at a speed that is slower than the first operating speed. Therefore, at a normal condition which is not a vehicle impact early-warning condition, the seat operating means 16 (the reclining motor 12, the seat sliding motor 13 and the vertical motor 14) is operated at the second operating speed which is appropriate to a normal condition. On the other hand, at an emergency condition which is a vehicle impact early-warning condition, the seat sliding means 16 can be operated at the first operating speed which is higher than the second operating speed. Therefore, it is possible to complete the operation by the seat operating mans 16 during such a short period of time from a time at which a vehicle impact is foreseen to a time at which a vehicle impact actually occurs. As described above, according to the embodiment of the present invention, it is possible to obtain a seat operation speed which is respectively appropriate to an emergency condition and a normal condition.

At an event of emergency, the operation by the seat operating means 16 is controlled by means of duty control or linear control. For example, when the operation by the seat operating means 16 is controlled by controlling duty of a voltage to be applied, a PWM circuit is adopted, in which a duty cycle of a pulse width is changed. That is, when voltage is supplied from a battery 27 to the seat operating means 16, by controlling a stationary state voltage of the battery 27, a set voltage value for the seat operating means 16 is applied to the seat operating means 16. In this case, voltage to be supplied to the seat operating means 16 is determined through a process in which a control set value is referred to relative to the stationary state voltage value of the battery 27. This determination of a degree of voltage to be applied to the seat operating means 16 is implemented by use of the PWM circuit. The set voltage value for the seat operating means 16 represents a voltage value respectively prescribed for the reclining motor 12, the seat sliding motor 13, and the vertical motor 14. The set voltage value can be set for each element in accordance with a vehicle condition such as a normal condition and an emergency condition, respectively. For example, when the steady sate voltage value outputted from the battery 27 is 24V, a set voltage value for the seat sliding motor 13 at a normal condition is 12V, while the set voltage value for the seat sliding motor 13 at an emergency condition is 20V. For example, when voltage is supposed to be supplied to the seat sliding means 16 at an emergency condition, the controller 11 refers to a first control set value (20/24 = 0.83) relative to the steady state voltage value (24V) outputted from the battery 27 and supplies voltage at 20V (24 × 0.83) to the seat operating means 16. As described above, according to the embodiment of the present invention, determination of a degree of voltage to be applied to the seat operating means 16 is performed by use of a known circuit. Therefore, it is possible to facilitate controlling operation by the seat operating means 16. Hereinafter, a degree of voltage to be applied to the seat operating means 16 is controlled by use of a PWM circuit.

Next, described below is controlling operation of the vehicle occupant protecting apparatus according to the embodiment of the present invention with reference to a flowchart illustrated in Fig. 3.

In the first place, the controller 11 determines at step S1 whether a vehicle occupant has operated the operating switch 20 for the purpose of operating the seat 1 to an arbitrary position. When an affirmative answer yes is obtained at step S1, i.e., when a vehicle occupant has operated the operating switch 20, the controller 11 determines that an actual vehicle condition is a normal condition which is not a vehicle impact early-warning condition, and operates the seat 1 at the second operating speed which is employed at a normal condition. A seat speed control at a normal condition is described later.

On the other hand, when a negative answer now is obtained at step S1, i.e., when a vehicle occupant has not operated the operating switch 20, the controller 11 judges a possibility of a vehicle impact on the basis of outputs, from either the vehicle impact early-warning sensor 21 or the vehicle stability control system 22, or from both thereof. When an affirmative answer yes is obtained at step S2, i.e., when there is a possibility of a vehicle impact, the program proceeds to step S3 so as to detect the presence of a vehicle impact.

When a negative answer no is obtained at step S3, i.e., when a vehicle impact has not occurred, and the controller 11 determines that a vehicle impact can not be avoided at a fixed rate or more, each portion of the seat 1 is adjusted to a predetermined target position. This operation of each portion of the seat 1 is referred to as an impact preliminary operation. In this case, the controller 11 operates the seat 1 at the first operating speed which is employed at an emergency condition. A seat speed control at an emergency condition is described later.

When an affirmative answer yes is obtained at step S3, i.e., when a vehicle impact is detected, there is a possibility that a load applied to a vehicle occupant is increased by a seat belt due to an unnecessary operation of the seat 1. Therefore, the control, by which the seat 1 is operated to the predetermined target position, is not performed.

(Seat speed control at an emergency condition)

At an emergency condition, it is preferable that the seat 1 is set at a target position in quick motion. The target position herein represents a seat position at which a vehicle occupant can be appropriately protected by use of safety equipment such as a seat belt and an airbag. Herein, a target position of each portion (predetermined operation mechanism 15) of the seat 1 can be determined as described below.

In connection with the reclining mechanism 6, the controller 11 judges, on the basis of outputs from the reclining angle detecting device 17, whether a reclining angle of the seat 1 has fell within a predetermined reclining angle range. Herein, this predetermined reclining angle range is determined on the basis of a range of a reclining angle which is appropriate to protect an occupant at the event of vehicle impact.

In connection with the seat sliding mechanism 9, the controller 11 judges, on the basis of outputs from the sliding position detecting device 18, whether a longitudinal position of the seat 1 has fell within a predetermined position range. Herein, this predetermined position range is determined on the basis of a range of a seat position which is appropriate to protect an occupant at the event of vehicle impact.

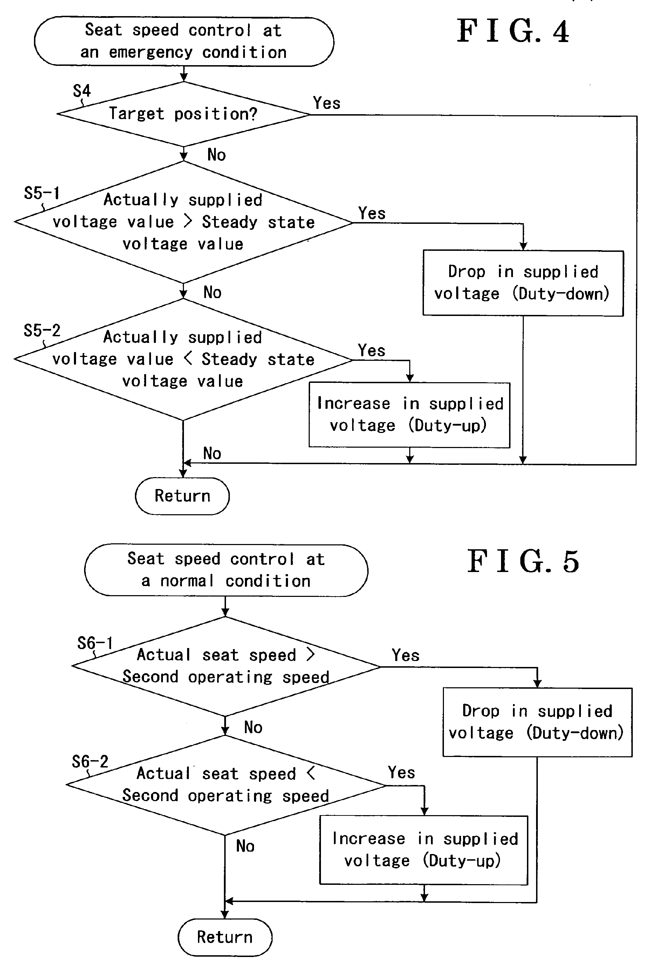

In connection with the front vertical mechanism 10, the controller 11 judges, on the basis of outputs from the projecting amount detecting device 19, whether a front portion of the seat cushion 3 projects in a vertical direction at an amount which falls within a predetermined projecting amount range. Herein, this predetermined projecting amount range is determined on the basis of a range of a seat position which is appropriate to protect an occupant at the event of vehicle impact. As is illustrated in Fig. 4, at step S4, in order to start operating the seat 1 at the first operating speed, the controller 11 first of all judges whether the seat 1 has been located at the target position. When a negative answer no is obtained at step S4, i.e. when the controller 11 judges that the seat 1 has not been located at the target position, the seat 1 is operated at the first operating speed which is employed so as to adjust the posture or position of the seat 1.

In order to obtain the first operating speed, if the voltage value which is actually supplied to the seat operating means 16 from the battery 27 (i.e., an actually supplied voltage) is different from a steady state voltage value that is usually used by the seat operating means 16, a control set value is modified in response to a difference between the actually supplied voltage value and the steady state voltage value in such a manner that the actually supplied voltage value to the seat operating means 16 is controlled to an emergency set voltage value of the seat operating means 16. As a result, the first operating speed can be obtained.

Going back to the flowchart illustrated in Fig. 4, at step S5-1, the controller 11 judges whether an actually supplied voltage value to the seat operating means 16 is greater than the steady state voltage value consumed by the seat operating means 16. When an affirmative answer yes is obtained at step S5-1, i.e., when an actually supplied voltage of the seat operating means 16 is greater than the steady state voltage value consumed by the seat operating means 16, a control is implemented by use of a PWM circuit, the control according to which a control set value is reduced in response to a difference between an actually supplied voltage value and the steady state voltage value in such a manner that the voltage supplied to the seat operating means 16 is controlled to an emergency set voltage value of the seat operating means 16. In this case, a duty ratio is lowered at the PWM circuit. For example, when the steady state voltage value usually employed by the seat operating means 16 is 24V, and the actually supplied voltage value to the seat operating means 16 is 25V, a voltage value at 20V is supplied to the seat operating means 16 with reference to the second control set value (20/25 = 0.8). That is, comparing with the first control set value (20/04 = 0.83) employed at the time that the actually supplied voltage value is substantially equal to the steady state voltage value, the second control set value can be controlled to be lower.

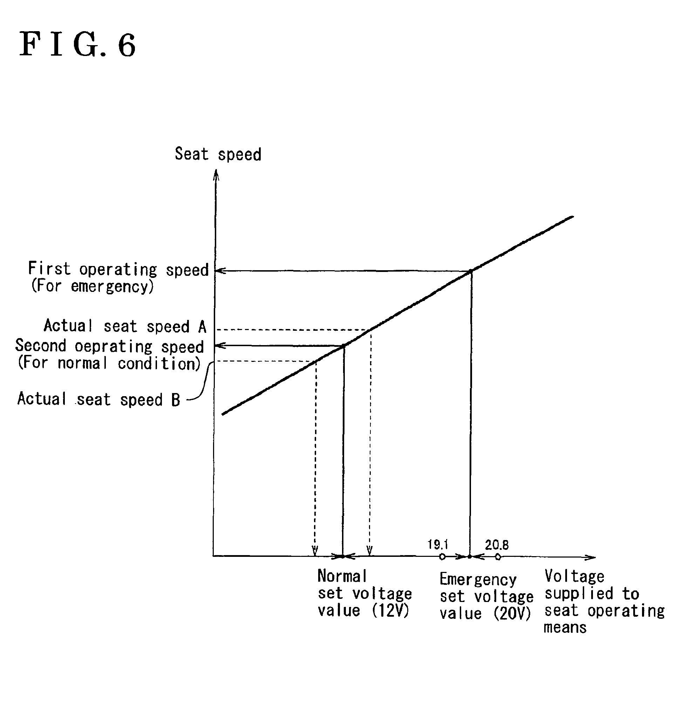

For example, when the actually supplied voltage value (25V) of the seat operating means 16 is greater than the steady state voltage value (24V) which is generally employed by the seat operating means 16, the first control set value (0.83) is referred to in stead of referring to the second control set value (0.80) which should have been actually referred to. In such a case, the voltage supplied to the seat operating means 16 would be 20.8V (25 × 0.83), as is illustrated in Fig. 6. However, according to the embodiment of the present invention, the voltage value to be supplied to the seat operating means 16 is controlled to the emergency set value (20V), with reference to the second control set value (0.8), thereby enabling to drop a level of voltage to be supplied to the seat operating means 16.

Therefore, at an emergency condition, the seat operating means 16 is applied with the emergency set voltage value. Therefore, according to the embodiment of the present invention, it is possible to prevent the seat 1 from being operated at a speed that exceeds the predetermined first operating speed, and is possible to prevent an occupant from being subjected to load of which amount is beyond expectation.

When a negative answer no is obtained at step S5-1, i.e., when the actually supplied voltage value is smaller than the steady state voltage value, the program proceeds to step S5-2, wherein a control is implemented by use of a PWM circuit, the control according to which a control set value is increased in response to a difference between the actually supplied voltage value and the steady state voltage value in such a manner that the voltage supplied to the seat operating means 16 is controlled to the emergency set voltage. A duty ratio is increased at the PWM circuit.

For example, when the steady voltage value usually employed by the seat operating means 16 is 24V, and the actually supplied voltage value to the seat operating means 16 is 23V, a voltage value at 20V is supplied to the seat operating means 16, with reference to a third control set value (20/23 = 0.86). That is, comparing with the first control set value (20/24 = 0.83) employed at the time that the actually supplied voltage value is substantially equal to the steady state voltage value, the third control set value can be controlled to be higher than the first control set value.

For example, when the actually supplied voltage (23V) to the seat operating means 16 is smaller than the steady state voltage value (24V), which is generally employed by the seat operating means 16, the first control set value (0.83) is referred to instead of the third control set value (0.86), which should have been actually referred to. In such a case, the voltage applied to the seat operating means 16 would be 19.1 V (23 × 0.83), as is illustrated in Fig. 6. However, according to the embodiment of the present invention, because the voltage to be applied to the seat operating means 16 is controlled to the emergency set voltage value (20V), the voltage supplied to the seat operating means 16 is eventually increased.

Therefore, at an emergency condition, the seat operating means 16 is not applied with a voltage that is smaller than the emergency set voltage value. In other words, because the seat 1 is required to be quickly controlled to the target position, it is possible to adjust the actually supplied voltage value to the seat operating means 16 so as to obtain quickly output which is sufficient so as to quickly displace the seat 1 to the target position. Therefore, it is possible to obtain a seat operating speed, which is necessary for an emergency case, and is possible to operate the seat 1 at a good and high speed that is appropriate to protect a vehicle occupant at an emergency event.

Further, at an emergency condition, in order to control a vehicle condition to be appropriate in anticipation of a vehicle impact, it is necessary to operate multiple portions, such as a seat, a seat belt, a window and a sunroof, at the same time. In this case, if multiple portions are driven at the same time, drop in voltage may occur due to deficiencies in a degree of voltage supplied by the battery 27. Therefore, it is difficult to obtain a seat operating speed which is necessary at an emergency case. However, according to the embodiment of the present invention, a control set value is changed, on the basis of comparison between the actually supplied voltage value to the seat operating means 16 and the steady state voltage value generally used for the seat operating means, in response to a difference between the actually supplied voltage value and the steady state voltage value. Therefore, the actually supplied voltage value to the seat operating means 16 is controlled to the emergency set voltage value. The seat operating speed is hence controlled to the first operating speed. As described above, even when drops in voltage of the battery 27 at an emergency condition occurs, the seat operating means 16 can operate the seat 1 at a condition that the seat 1 is applied with the emergency set voltage by which the seat operating means 16 can obtain a sufficient output. That is, according to the embodiment of the present invention, because an output of voltage to the seat operating means 16 is adjusted to be appropriate in order to obtain a desired seat operating speed at an emergency, an operation required to the seat 1 can be reliably completed at an emergency. Therefore, it is possible to assure quickly and reliably an operation required to protect a vehicle occupant at a vehicle impact.

(Seat speed control at a normal condition)

When the seat 1 is operated to a position intended by an occupant in response to an on operation of the operating switch 20, the seat position is changed at the second operating speed which is relatively slow and is not unpleasant to a vehicle occupant.

In response to an on operation of the operating switch 20, the predetermined operating mechanism 15 is operated. In this case, a seat speed, which is actually obtained in order to operate the seat 1 is referred to as an actual seat speed. At a normal condition, it is necessary to set a seat speed at a target speed. Therefore, voltage to be supplied to the seat operating means 16 is adjusted with reference to this actual seat speed. Therefore, it is possible to obtain with high reliability a speed for operating the seat 1 which is appropriate to a normal condition. As is illustrated in Fig. 5, at step S6-1, this actual seat speed is compared with the second operating speed. When the actual seat speed by the seat operating means 16 is different from the second operating speed, a control set value is changed in response to a difference between the actual seat speed and the second operating speed in such a manner that the actually supplied voltage value to the seat operating means 16 is controlled to the normal set voltage value of the seat operating means 16. Therefore, the operating speed of the seat 1 by the seat operating means 16 is approximated to the second operating speed.

That is, when an affirmative answer yes is obtained at step S6-1, i.e., when the actual seat speed is greater than the second operating speed, a control set value is changed in response to a difference between the actual seat speed and the second operating speed in such a manner that the actually supplied voltage value to the seat operating means 16 is controlled to the normal set voltage value of the seat operating means 16. At step S6-2, the controller 11 determines whether the actual seat speed is smaller than the second operating speed. When an affirmative answer yes is obtained at step 6-2, i.e., when the actual seat speed is smaller than the second operating speed, a control set value is varied in response to a difference between the actual seat speed ant the second operating speed in such a manner that the actually supplied voltage value to the seat operating means 16 is controlled to the normal set voltage value of the seat operating means 16.

That is, a control set value is controlled, on the basis of comparison of the second operating speed relative to the actual seat speeds A and b (referring to Fig. 6), in such a manner that the actually supplied voltage value to the seat operating means 16 is controlled to the normal set voltage value of the seat operating means 16. Therefore, the seat operating means 16 is always applied to the normal set voltage at which a sufficient output can be generated for the seat operating means 16 to perform the proper function. That is, because the output to the seat operating means 16 is adjusted to be appropriate so as to obtain a desired seat speed at a normal condition, it is possible to prevent the seat 1 from being operated at a high speed which makes an occupant unpleasant. It is further possible to finely adjust a seat position, which is not easy at a time that the seat 1 is moved at a high speed. Further, even if load applied to the seat 1 fluctuates, it is possible to obtain a seat speed which is appropriate to the normal condition, by adjusting the actually supplied voltage to the seat operating means 16 so as to obtain sufficient output for the seat operating means 16.

According to the embodiment of the present invention, as described above, the actual seat sped can be approximated to the second operating speed by controlling the actually supplied voltage value to the seat operating means 16 to the normal set voltage value. However, it is possible to approximate the actual seat speed to the second operating speed, only by changing a control set value by comparing the actual seat speed with the second operating speed, without referring to the normal set voltage value.

As an embodiment modified from the above-described embodiment, it is possible, by memorizing a seat operating condition at a normal condition, to set a control set value relevant to the seat operating means 16 at an emergency. Herein, memorizing a seat operating condition at a normal condition represents memorizing, for example, a voltage supplying condition to the seat operating means 16, a ratio between the actual seat speed and the second operating speed, and so on. Described below is about memorizing a voltage supplying condition to the seat operating means 16.

The voltage supplying condition to the seat operating means 16 at an emergency condition is determined on the basis of a duty ratio memorized, the duty ratio which has been duty-controlled at a PWM circuit. For example, when a degree of voltage outputted from the battery 27 is reducing, a voltage supplying condition to the seat operating means 16 at a normal condition (a duty ratio) is memorized. In this case, because an actual voltage outputted from the battery 27 is being reduced, the memorized duty ratio is higher than a normal duty ratio. Once a vehicle condition becomes an impact early-warning condition, a control set value is changed in such a manner that the actually supplied voltage value to the seat operating means 16 is controlled to the emergency set voltage value of the seat operating means 16. In this case, by employing the memorized duty ratio as an adjustment factor for determining a control set value, it is possible to make up for a lack of electric power from the battery 27. Therefore, even if a drop in electric power outputted from the battery 27 is expected while the seat 1 is being operated to a target position, it is possible to determine a voltage supplied to the seat operating means 1 on the basis of a control set value adjusted on the basis of the memorized duty ratio. Therefore, it is possible to perform an operation of the seat 1 with high reliability, which is necessary at an emergency.

The principles, the preferred embodiment and mode of operation of the present invention have been described in the foregoing specification. However, the invention, which is intended to be protected, is not to be construed as limited to the particular embodiment disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents that fall within the spirit and scope of the present invention as defined in the claims, be embraced thereby.

## Claims

1. An apparatus for protecting a vehicle occupant comprising:
an impact-predicting means (23) for predicting an impact of a vehicle;
a seat operating means (16) for operating, based on an output from the impact-predicting means (23), a predetermined operating mechanism (15) so as to control each portion of a seat (1) to a predetermined target position;
a controlling means (11) for controlling operation of the seat operating means (16),
wherein a speed for operating the seat (1) by the seat operating means (16) is selectively set at a first operating speed, which is employed at an emergency condition at which a vehicle impact is predicted, and at a second operating speed, which is employed at a normal condition at which a vehicle impact is not predicted, and is lower than the first operating speed.

2. An apparatus for protecting a vehicle occupant according to claim 1, wherein, at an emergency condition, if an actually supplied voltage value to the seat operating means (16) is different from a steady state voltage value of the seat operating means (16), a control set value is changed in response to a difference between the actually supplied voltage value and the steady state voltage value in such a manner that the actually supplied voltage value to the seat operating means (16) is controlled to an emergency set voltage value of the seat operating means (16), and wherein the speed for operating the seat (1) is controlled to be the first operating speed.

3. An apparatus for protecting a vehicle occupant according to claim 1, wherein, at a normal condition, if an actual seat speed by the seat operating means (16) is different from the second operating speed, a control set value of the actually supplied voltage value to the seat operating means (16) is changed in response to a difference between the actual seat speed and the second operating speed, and wherein the speed for operating the seat (1) is approximated to be the second operating speed.

4. An apparatus for protecting a vehicle occupant according to claim 2, wherein, at a normal condition, if an actual seat speed by the seat operating means (16) is different from the second operating speed, a control set value of the actually supplied voltage value to the seat operating means (16) is changed in response to a difference between the actual seat speed and the second operating speed, and wherein the speed for operating the seat (1) is approximated to be the second operating speed.

5. An apparatus for protecting a vehicle occupant according to claim 1, wherein a condition for operating the seat (1) at a normal condition is memorized, and a set control value of the seat operating means (16) at an emergency condition is determined based on the memorized seat operating condition.

6. An apparatus for protecting a vehicle occupant according to claim 2, wherein a condition for operating the seat (1) at a normal condition is memorized, and a set control value of the seat operating means (16) at an emergency condition is determined based on the memorized seat operating condition.

7. An apparatus for protecting a vehicle occupant according to claim 3, wherein a condition for operating the seat (1) at a normal condition is memorized, and a set control value of the seat operating means (16) at an emergency condition is determined based on the memorized seat operating condition.

8. An apparatus for protecting a vehicle occupant according to claim 4, wherein a condition for operating the seat (1) at a normal condition is memorized, and a set control value of the seat operating means (16) at an emergency condition is determined based on the memorized seat operating condition.

9. An apparatus for protecting a vehicle occupant according to any preceding claim, wherein an operation by the seat operating means (16) at an emergency condition is controlled by controlling a duty ratio of a voltage to be applied to the seat operating means (16).
